Europäisches Patentamt

European Patent Office

Office européen des brevets

(11) Publication number: **0 394 079**
**A1**

# EUROPEAN PATENT APPLICATION

(21) Application number: **90400540.2**

(22) Date of filing: **27.02.90**

(51) Int. Cl.⁵: **B60G 17/08**

(30) Priority: **21.04.89 DE 8905062 U**
**06.06.89 US 362291**

(43) Date of publication of application:
**24.10.90 Bulletin 90/43**

(84) Designated Contracting States:
**CH DE ES FR GB IT LI SE**

(71) Applicant: **Lin, Chien-Hung**
**No. 150, Chung-Hsiao Rd.,**
**Chia-Li Chen, Tainan Hsien(TW)**

(72) Inventor: **Lin, Chien-Hung**
**No. 150, Chung-Hsiao Rd.,**
**Chia-Li Chen, Tainan Hsien(TW)**

(74) Representative: **Schrimpf, Robert et al**
**Cabinet Regimbeau 26, Avenue Kléber**
**F-75116 Paris(FR)**

(54) **Automobile suspension system.**

(57) An automobile suspension system (I, II, III, IV, V) includes a hydraulic cylinder unit and a spring unit. A logic circuit may be provided in association with the hydraulic cylinder unit and the spring unit. The hydraulic cylinder unit includes a vertical suspension hydraulic cylinder (2, 20) which has a piston (23, 203) and a piston rod (22, 202). The suspension hydraulic cylinder (2, 20) is connected pivotally to a rocker arm (B, Y) of the automobile. The piston rod (22, 202) is connected pivotally to the bottom of the automobile body. The piston (23. 203) moves freely in the cylinder (2, 20) during normal travel of the automobile. When the automobile is accelerated, braked or steered, the piston (23, 203) can only move slowly a small distance in the cylinder (2, 20), thereby offering an anti-sway effect to the automobile body.

FIG. 1

## AUTOMOBILE SUSPENSION SYSTEM

This invention relates to an automobile suspension system, more particularly to an automobile suspension system which makes significant contributions to driving safety and riding comfort.

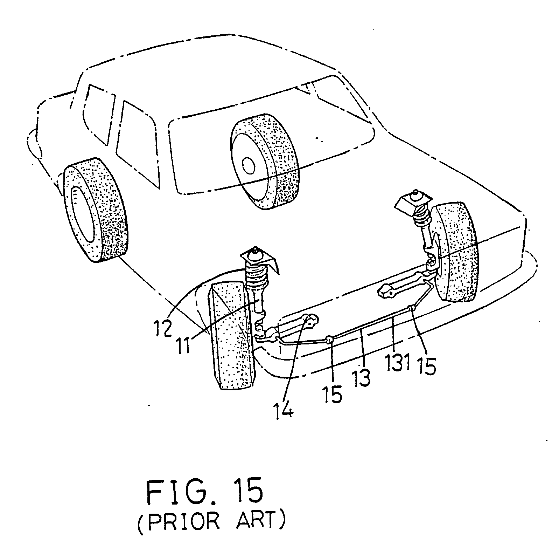

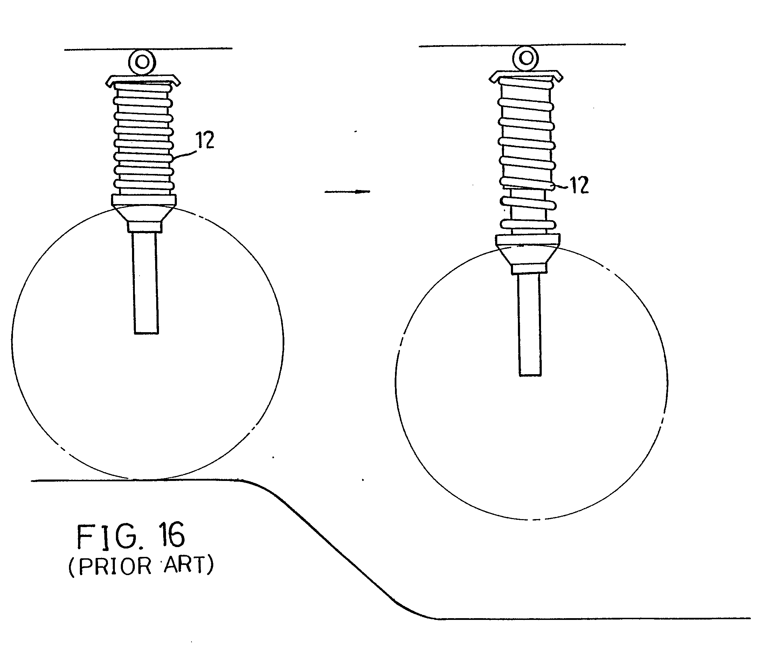

A so-called "independent front suspension" is used on most passenger cars and light-duty trucks. Fig. 15 shows a conventional independent front suspension assembly which includes two shock absorbers 11, two coil springs 12 and a generally U-shaped stabilizer bar 13. The bar 13 is secured to two control arms 14 at two ends thereof and has an intermediate portion 131 which is journalled on the automobile frame by two bushings 15. When the automobile is steered, or when one of the front wheels abruptly rolls over a bump, the stabilizer bar 13 can minimize the sway of the automobile. A slim bar 13 maintains riding comfort, but insufficiently prevents the sway of the automobile. On the other hand, an adequately thickened bar 13 provides a satisfactory anti-sway effect, however, the occupants in the automobile bear a great deal of discomfort when the automobile travels on an uneven road. Referring to Fig. 16, in a situation where an automobile advances rapidly in the direction indicated by the arrow, when abruptly encountering concaved ground, the wheels of the automobile cannot contact the ground, thereby relaxing the springs 12. When the wheels again contact the ground, an intense shock to the automobile body and even damage to the shock absorbers 11 are caused. As a safety precaution to these conditions, the automobile must be urgently braked, with the result that the occupants in the automobile bear a great deal of discomfort.

It is the main object of this invention to provide an automobile suspension system which makes significant contributions to driving safety and riding comfort.

According to this invention, an automobile suspension system includes a hydraulic cylinder unit and a spring unit. A logic circuit may be provided in association with the hydraulic cylinder unit and the spring unit. The hydraulic cylinder unit includes a vertical suspension hydraulic cylinder which has a piston and a piston rod. The suspension hydraulic cylinder is connected pivotally to a rocker arm of the automobile. The piston rod is connected pivotally to the bottom of the automobile body. The piston moves freely in the cylinder during normal travel of the automobile. When the automobile is accelerated, braked or steered, the piston can only move slowly a small distance in the cylinder, thereby offering an anti-sway effect to the automobile body.

Other features and advantages of this invention will become apparent in the following detailed description of the preferred embodiments of this invention with reference to the accompanying drawings, in which:

Fig. 1 illustrates an automobile suspension system according to a first embodiment of this invention;

Fig. 2 illustrates the self-adjusting type damper of the automobile suspension system according to the first embodiment of this invention;

Figs. 3, 4 illustrate the operation of the automobile suspension system according to the first embodiment of this invention;

Fig. 5 illustrates an automobile suspension system according to a second embodiment of this invention;

Fig. 6 illustrates the operation of the automobile suspension system according to the second embodiment of this invention;

Fig. 7 illustrates an automobile suspension system according to a third embodiment of this invention;

Fig. 8 illustrates the operation of the automobile system according to the third embodiment of this invention;

Fig. 9 illustrates an automobile suspension system according to a fourth embodiment of this invention;

Figs. 10, 11 illustrate the operation of the automobile suspension system according to the fourth embodiment of this invention;

Fig. 12 illustrates an automobile suspension system according to a fifth embodiment of this invention;

Fig. 13 illustrates the operation of the automobile suspension system according to the fifth embodiment of this invention;

Fig. 14 illustrates the association of the third embodiment with the fifth embodiment;

Fig. 15 illustrates a conventional automobile suspension system; and

Fig. 16 illustrates the change of the conventional automobile suspension system when encountering concaved ground.

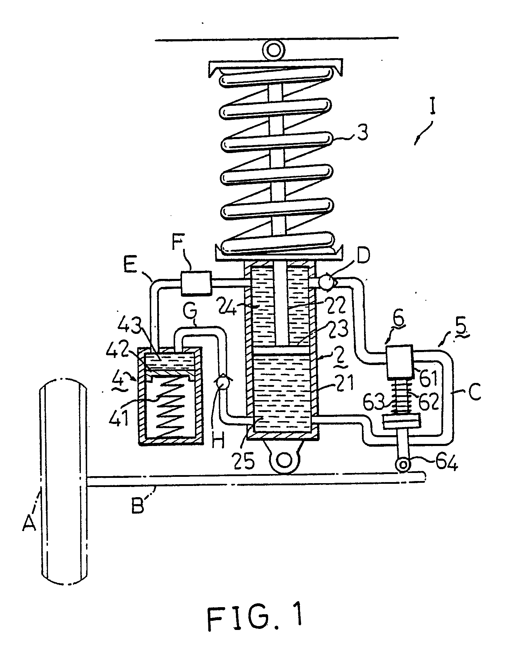

Referring to Fig. 1, the automobile suspension system (I) of the first embodiment of this invention includes a vertical main suspension hydraulic cylinder 2, a suspension spring 3, a restoration chamber unit 4, a hydraulic piping system 5 and a self-adjusting type damper 6.

The main hydraulic cylinder 2 includes a cylinder body 21, a piston rod 22 and a piston 23. The cylinder body 21 is connected pivotally to the rocker arm (B) of an automobile wheel (A) at the bottom end thereof, has an upper oil storage space 24 positioned above the piston 23, and a lower oil storage space 25 positioned under the piston 23. The piston rod 22 is connected securely to the piston 23 at the bottom end thereof and extends from the upper end of the cylinder body 21 to connect pivotally to the bottom of the automobile body.

The suspension spring 3 is sleeved on the piston rod 22 above the cylinder body 21 and performs the function of absorbing shock.

The restoration chamber unit 4 includes a housing defining a sealed restoration chamber therein, and a second spring 41 pushing a restoration piston 42 upward. The restoration chamber has a third oil storage space 43 above the restoration piston 42.

The hydraulic piping system 5 includes a first conduit (C) intercommunicating the upper oil storage space 24 and the lower oil storage space 25 of the main suspension hydraulic cylinder 2. A one-way valve (D) is disposed on the first conduit (C) so as to limit the hydraulic oil flowing from the lower oil storage space 25 to the upper oil storage space 24. A second conduit (E) intercommunicates the upper oil storage space 24 of the main suspension hydraulic cylinder 2 and the third oil storage space 43 of the restoration chamber unit 4. A first damper (F) is disposed on the second conduit (E). A third conduit (G) intercommunicates the third oil storage space 43 and the lower oil storage space 25. A one-way valve (H) is disposed on the third conduit (G) so as to limit the hydraulic oil flowing from the third oil storage space 43 to the lower oil storage space 25.

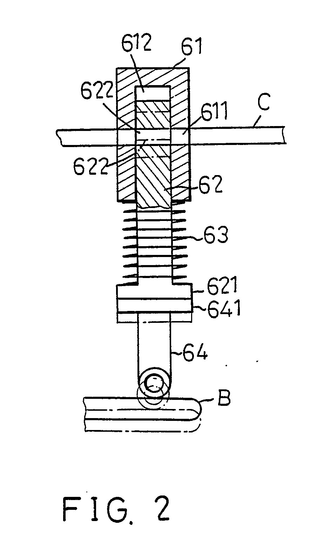

Referring to Fig. 2, the self-adjusting type damper 6 includes a hollow cylindrical body 61, a cylindrical control rod 62, a coiled push spring 63 and a push rod 64. The body 61 is fixed on the automobile body and has two first oil passages 611 respectively communicated with the two sections of the first conduit (C), and a cylindrical, vertical hole 612 formed in the lower end surface of the body 61 and communicated with the first oil passages 611 at the intermediate portion thereof. The control rod 62 is disposed movably within vertical hole 612 in the body 61, has a diameter-increased lower end portion 621 positioned outside the body 61, and a second oil passage 622 communicated with the first oil passages 611 at two ends thereof. When the second oil passage 622 registers with the first oil passages 611, the hydraulic oil in the second oil passage 622 has the highest flow rate. When the control rod 62 moves upward or downward from the position shown in Fig. 2, the flow rate of the hydraulic oil in the second oil passage 622 is reduced.

The push spring 63 is sleeved on the control rod 62 between the body 61 and the lower end portion 621 of the control rod 62 so as to bias the control rod 62 to press against the push rod 64. The push rod 64 is connected pivotally to the rocker arm (B) at the lower end thereof.

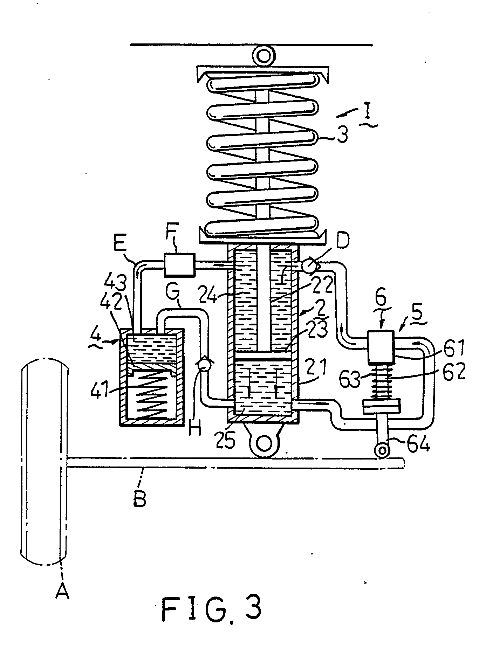

Referring to Fig. 3, in a situation where the automobile travels on an uneven road surface, when the piston 23 is moved downward, the hydraulic oil in the lower oil storage space 25 is compressed to flow into the upper oil storage space 24. Because the piston rod 22 extends through the upper oil storage space 24, the volume of the upper oil storage space 24 is smaller than that of the lower oil storage space 25. As a result, the excessive hydraulic oil in the upper oil storage space 24 flows into the third oil storage space 43 through the second conduit (E).

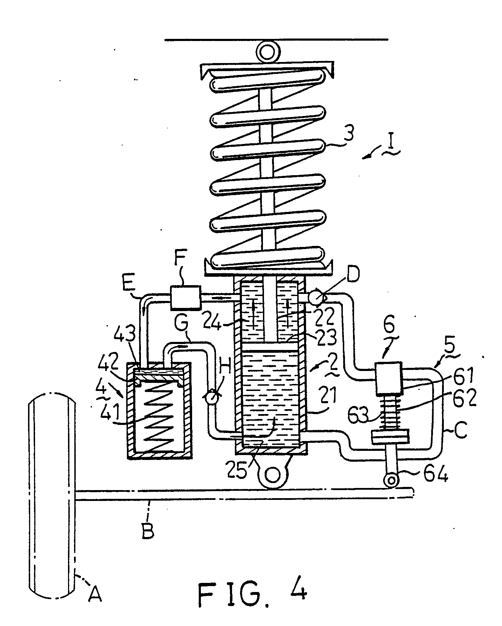

Referring to Fig. 4, when the piston 23 moves upward, the hydraulic oil in the upper oil storage space 24 flows into the third oil storage space 43 of the restoration chamber unit 4. At the same time, the hydraulic oil in the third oil storage space 43 is compressed by the second spring 41 to flow into the lower oil storage space 25. Shock is absorbed by the suspension spring 3. The self-adjusting type damper 6 reduces the flow rate of the hydraulic oil in the first conduit (C), while the first damper (F) reduces the flow rate of the hydraulic oil in the second conduit (E). Therefore, both the self-adjusting type damper 6 and the first damper (F) facilitate smooth spring movement of the suspension spring 3 and promote riding comfort.

Referring again to Fig. 2, in a case where the automobile equipped with the automobile suspension system (I) of this invention encounters the concaved ground shown in Fig. 16, the rocker arm (B) and the push rod 64 move downward to the positions shown in the phantom lines, thereby reducing the oil flow area at two ends of the second oil passage 622. When the automobile wheels again contact the ground, the suspension spring 3 is compressed slowly. Slow spring movement of the suspension spring 3 can prevent damage to the suspension spring 3.

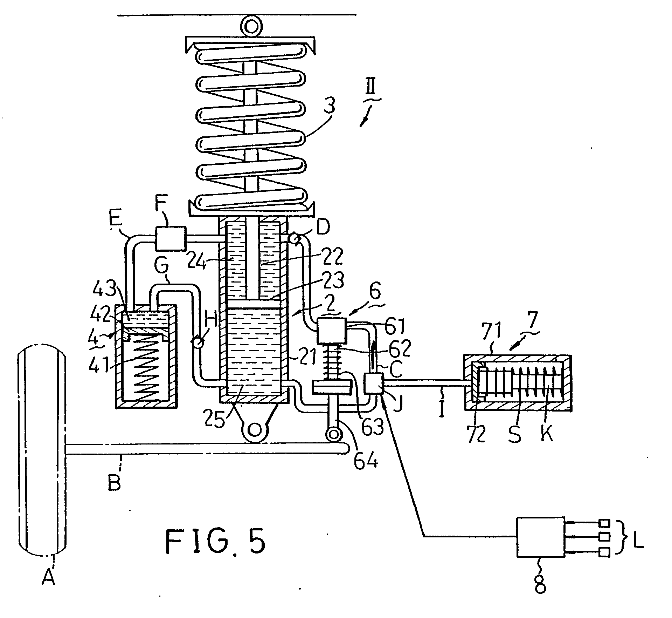

Fig. 5 shows an automobile suspension system (II) according to the second embodiment of this invention. As illustrated, the main part of the second embodiment is similar to that of the first embodiment except for the addition of an anti-sway hydraulic cylinder 7, an anti-sway spring (S) and a processing system 8.

The anti-sway hydraulic cylinder 7 has a cylinder body 71 fixed on the automobile body, and a first piston 72 disposed in the cylinder body 71 so as to define a first oil chamber in the left end portion of the anti-sway hydraulic cylinder 7. An anti-sway spring (S) is disposed in the anti-sway hydraulic cylinder 7, so as to bias the first piston 72 to compress the hydraulic oil in the first oil chamber of the anti-sway hydraulic cylinder 7.

Unlike the first embodiment, the hydraulic piping system further includes a fourth conduit (I), which is communicated with the first oil chamber of the anti-sway hydraulic cylinder 7. A first two-way valve (J) is disposed on the first conduit (C). The anti-sway spring (S) includes a damper (K) which facilitates smooth spring movement of the anti-sway spring (S). Certainly, the self-adjusting type damper 6 may be replaced with any other suitable damper which cannot automatically regulate the flow of the hydraulic oil in the first conduit (C). The processing system 8 includes a plurality of sensors (L) generating signals when the automobile is accelerated, steered or braked, a logic circuit receiving the signals from the sensors (L) so as to activate the two-way valve (J) to close the first conduit (C) and open the fourth conduit (I). The sensors (L) are distributed on the automobile body, the steering wheel assembly and the automobile wheels.

When the automobile advances along a straight path, the first two-way valve (J) closes the fourth conduit (I) and opens the first conduit (C). In this case, the piston 23 can move freely so as to increase riding comfort.

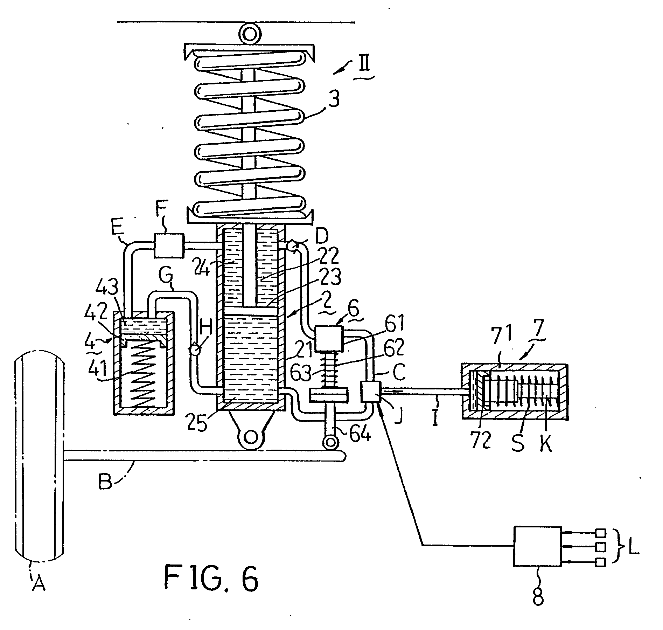

Referring to Fig. 6, when the automobile is accelerated, braked or steered, the processing system 8 generates a signal to the first two-way valve (J) so as to close the first conduit (C) and open the fourth conduit (I). As a result, the hydraulic oil in the lower oil storage space 25 pushes the first piston 72 of the anti-sway hydraulic cylinder 7 to the right. With the anti-sway spring (S) acting on the first piston 72, the first piston 72 can only move a small distance. That is, the piston 23 of the main suspension hydraulic cylinder 2 can only move downward a small distance. Accordingly, the automobile suspension system (II) of this invention can substitute for conventional stabilizer bars so as to offer an anti-sway effect to the automobile when accelerated, braked or steered.

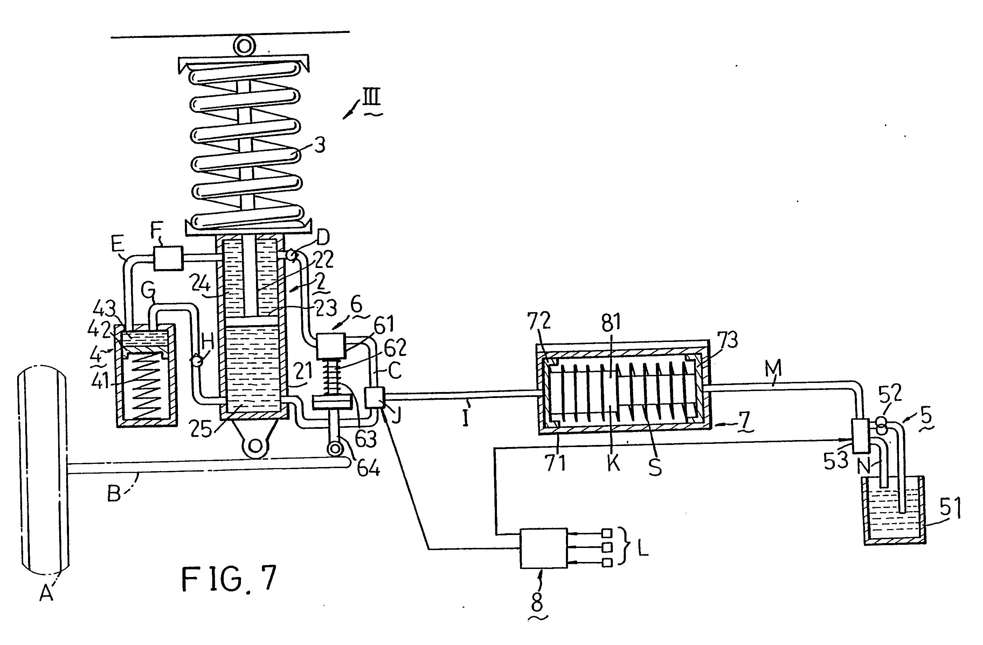

Fig. 7 shows an automobile suspension system (III) according to the third embodiment of this invention. As illustrated, as a modification to the second embodiment, the anti-sway hydraulic cylinder 7 further includes a second piston 73 defining a second oil chamber in the right end portion of the anti-sway hydraulic cylinder 7. The anti-sway spring (S) biases the second piston 73 to move to the right so as to compress the second oil chamber. In this embodiment, the hydraulic piping system 5 further includes an oil tank 51, an oil pump 52, a second two-way valve 53, a fifth conduit (M) and an oil return conduit (N). The second two-way valve 53 can be actuated to cause the hydraulic oil from the oil tank to flow into the second oil chamber of the anti-sway hydraulic cylinder 7 through the fifth conduit (M), thereby moving the second piston 73 to the left. The processing system 8 includes a position sensor 81 disposed on the anti-sway hydraulic cylinder 7 so as to detect the position of the second piston 73.

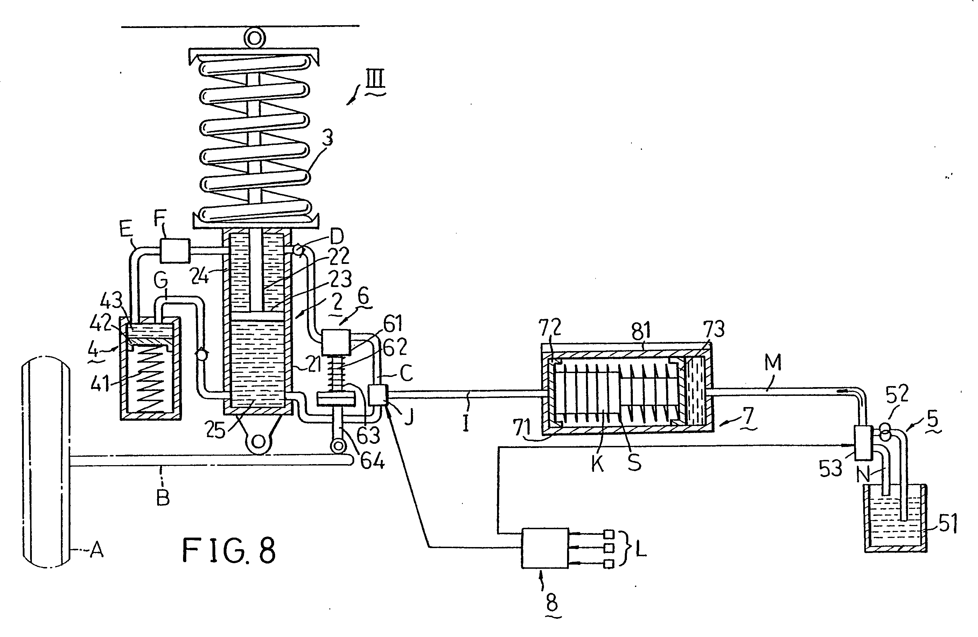

Referring to Fig. 8, the processing system 8 is designed so as to set the position of second piston 73 of the anti-sway hydraulic cylinder 7 depending upon the automobile speed. For example, in design, when the advancing speed of the automobile reaches 100 km/hr, the right end of the anti-sway spring (S) must be moved 30 mm by the second piston 73. In this case, the second two-way valve 53 keeps the fifth conduit (M) in an open condition until the anti-sway spring (S) is compressed to shorten 30 mm.

When the automobile is accelerated, braked or steered, the sensors (L) open the fourth conduit (I). Because the anti-sway spring (S) has been compressed by the second piston 73 to a predetermined amount depending upon moving speed of the automobile, it is difficult for the first piston 72 to compress the anti-sway spring (S) again. This arrangement can maintain the balance of the automobile when steered rapidly.

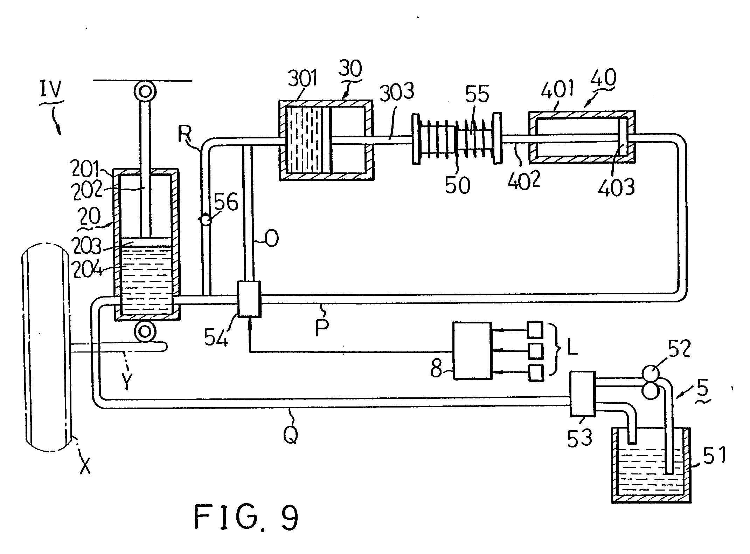

Referring to Fig. 9, the automobile suspension system (IV) of the fourth embodiment includes a vertical suspension hydraulic cylinder 20, a shock-absorbing hydraulic cylinder 30, an anti-sway hydraulic cylinder 40, a shock-absorbing spring 50, a hydraulic piping system 5 and a processing system 8.

The suspension hydraulic cylinder 20 includes a suspension cylinder body 201 connected pivotally to the rocker arm (Y) of an automobile wheel (X) at the bottom end thereof, a suspension piston rod 202 connected pivotally to the bottom of the automobile body at the top end thereof, and a suspension piston 203 connected securely to the suspension piston rod 202 so as to define an oil storage space 204 in the suspension cylinder body 201 under the suspension piston 203.

The shock-absorbing hydraulic cylinder 30 includes a shock-absorbing cylinder body 301 secured to the automobile body and having an inner diameter greater than that of the suspension cylinder body 201, a shock-absorbing piston 302 defining a shock-absorbing hydraulic chamber in the left end portion of the shock-absorbing cylinder body 301, and a shock-absorbing piston rod 303 connected to the shock-absorbing piston 302 at the left end thereof. The right end of the shock-absorbing piston rod 303 extends from the shock-absorbing cylinder body 301.

The anti-sway hydraulic cylinder 40 includes an anti-sway cylinder body 401 secured to the automobile body and having an inner diameter smaller than that of the suspension cylinder body 201, an anti-sway piston rod 402 arranged in line with the shock-absorbing piston rod 303, and an anti-sway piston 403 connected securely to the anti-sway piston rod 402 so as to define an anti-sway hydraulic chamber in the right end portion of the anti-sway cylinder body 401. The anti-sway piston 403 is normally positioned at the right end of the interior of the anti-sway cylinder body 401.

The shock-absorbing spring 50 interconnects the shock-absorbing piston rod 303 and the anti-sway piston rod 402 so as to compress both the shock-absorbing hydraulic chamber and the anti-sway hydraulic chamber.

The hydraulic piping system 5 includes an oil tank 51, an oil pump 52, a second two-way valve 53, a third two-way valve 54 and several conduits. A sixth conduit (O) intercommunicates the oil storage space 204 and the shock-absorbing hydraulic chamber in the shock-absorbing hydraulic cylinder 30, while a seventh conduit (P) intercommunicates the oil storage space 204 and anti-sway hydraulic chamber in the anti-sway hydraulic cylinder 40. A damper 55 is disposed in the shock-absorbing spring 50 so as to facilitate the smooth spring movement thereof. The second two-way valve 53 can be actuated to enable the hydraulic oil to flow from the oil tank 51 to the oil storage space 204 through an eighth conduit (Q). The third two-way valve 54 controls opening and closing of the sixth conduit (O) and the seventh conduit (P). A ninth conduit (R) intercommunicates the shock-absorbing hydraulic chamber of the shock-absorbing hydraulic cylinder 30 and the oil storage space 204 of the suspension hydraulic cylinder 20, and is equipped with a one-way valve 56 which limits the hydraulic oil flowing from the shock-absorbing hydraulic cylinder 30 to the suspension hydraulic cylinder 20. When the suspension piston rod 202 moves upward, the hydraulic oil flows rapidly from the shock-absorbing hydraulic cylinder 30 to the suspension hydraulic cylinder 20 through the ninth conduit (R).

The processing system 8 includes a plurality of sensors (L) distributed on the automobile body, automobile wheels and steering wheel. When the automobile is accelerated, braked or steered, the sensors (L) activate the third two-way valve 54 so as to open or close the sixth conduit (O).

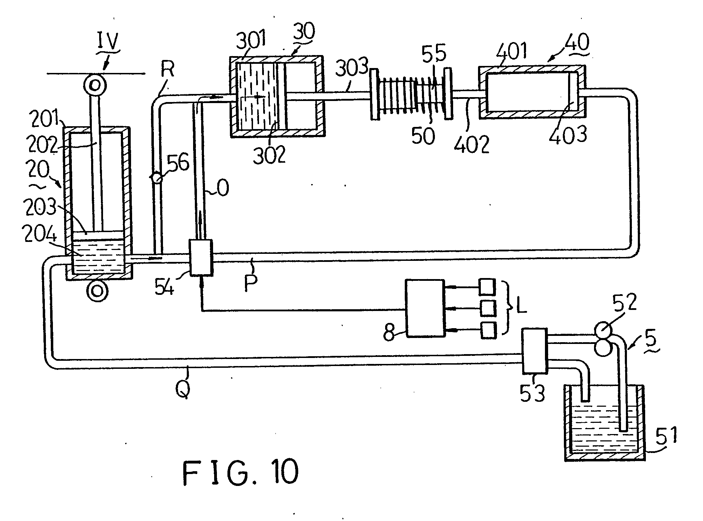

Referring to Fig. 10, when the automobile advances along a straight path, the third two-way valve 54 closes the seventh conduit (P). In a case where the automobile wheel (X) encounters an uneven road surface, the suspension piston 203 impels the hydraulic oil from the oil storage space 204 to the shock-absorbing cylinder 30, thereby pushing the shock-absorbing piston 302 to the right. Because the anti-sway piston 403 of the anti-sway hydraulic cylinder 40 is normally located at the right end of the interior of the anti-sway cylinder body 401, this movement of the shock-absorbing piston 302 cannot move the right end of the shock-absorbing spring 50. It has been described hereinbefore that the inner diameter of the suspension cylinder body 201 is smaller than that of the shock-absorbing cylinder body 301. The displacement of the shock-absorbing piston 30 is small so that the length of the shock-absorbing spring 50 is varied within a small range. Smooth spring movement of the suspension piston rod 202 is therefore achieved.

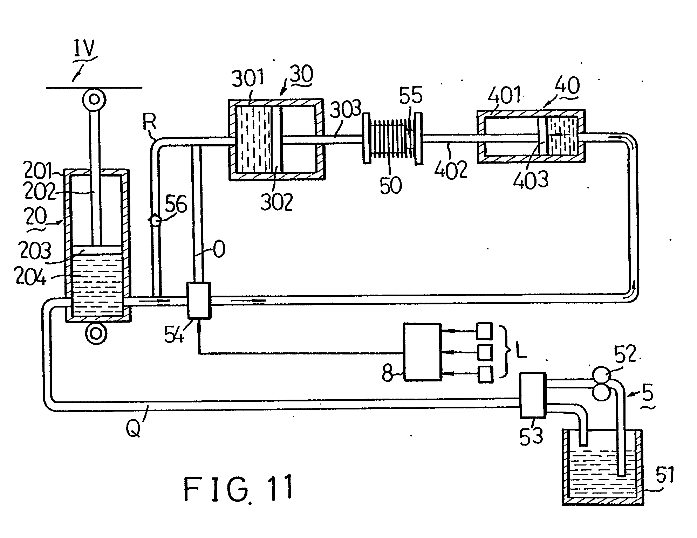

Referring to Fig. 11, when the automobile is accelerated, braked or steered, the sensors (L) generate signals to activate the third two-way valve 54 to close the sixth conduit (O) and open the seventh conduit (P). Because the inner diameter of the anti-sway cyclinder body 401 is smaller than that of the suspension cylinder body 201, the displacement of the anti-sway piston 403 is greater than that of the suspension piston 203, so that the shock-absorbing spring 50 is greatly compressed rapidly by the anti-sway piston 402. When the shock-absorbing spring 50 is compressed to a predetermined length, it is difficult to perform further compression thereto. Then, the suspension piston 203 can only continue to move a very small distance so as to achieve a satisfactory anti-sway effect.

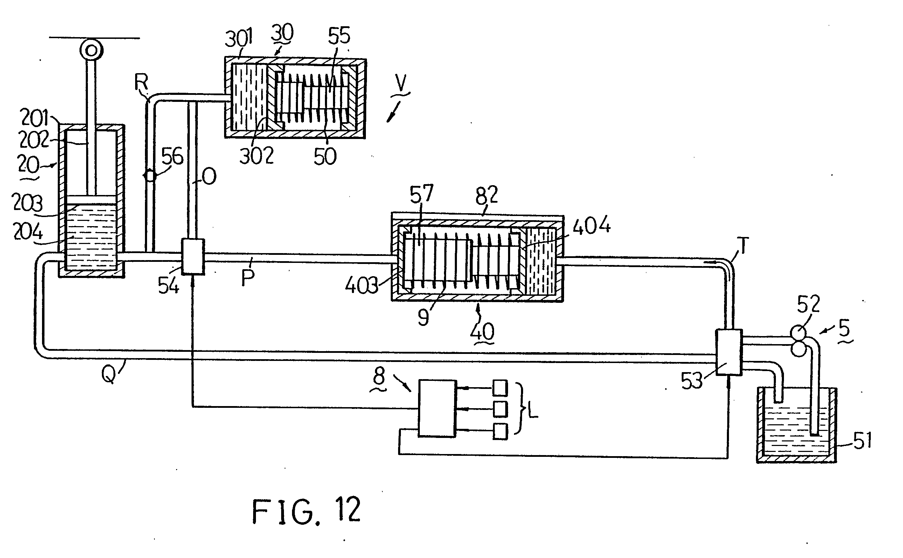

Referring to Fig. 12, the automobile suspension system (V) of the fifth embodiment includes a vertical suspension hydraulic cylinder 20, a shock-absorbing hydraulic cylinder 30, an anti-sway hydraulic cylinder 40, a hydraulic piping system 5, a shock-absorbing spring 50 and a processing system 8. The anti-sway hydraulic cylinder 40 includes an anti-sway cylinder body 401, a first anti-sway piston 403, a second anti-sway piston 404, an anti-sway spring 9 respectively biasing the first anti-sway piston 403 and the second anti-sway piston 404 to move to the left and right ends of the anti-sway cylinder body 401, and a damper 57 disposed in the anti-sway spring 9 so as to ensure smooth spring movement of the anti-sway spring 9. The shock-absorbing spring 50 is also equipped with a damper 55. The hydraulic piping system 5 further includes a tenth conduit (T) which interconnects the second two-way valve 53 and the anti-sway cylinder body 401. The processing system 8 further includes a position sensor 82 disposed on the anti-sway cylinder body 40 so as to determine the amount of compression of the anti-sway spring 9.

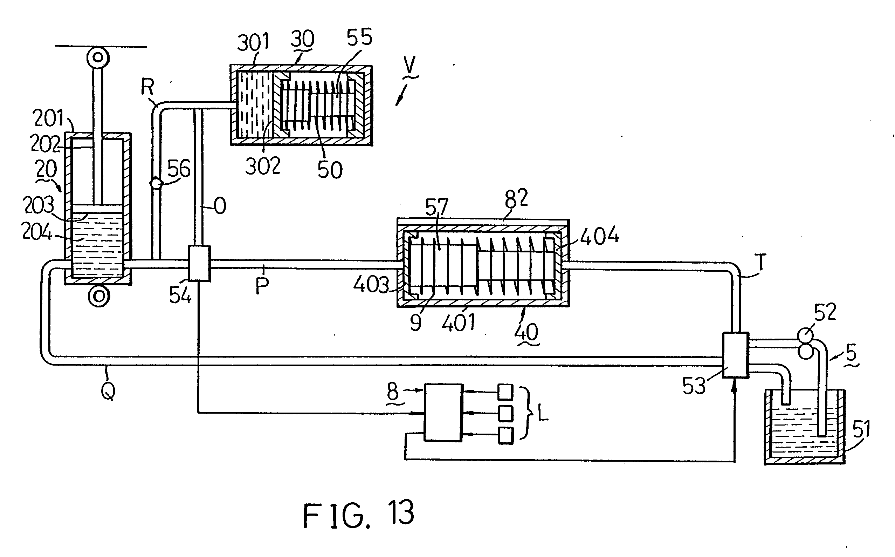

Referring to Fig. 13, the processing system 8 is designed so as to set the compression amount of the anti-sway spring 9 depending upon the advancing speed of the automobile. For example, in design, when the automobile's speed reaches 100 km/hr, the right end of the anti-sway spring 9 must be moved 30 mm to the left. The second two-way valve 53 must keep the tenth conduit (T) in an open condition until the position sensor 82 detects 30 mm-displacement of the right end of the anti-sway spring 9.

When the automobile advances along a straight path, the third two-way valve 54 closes the seventh conduit (P) so as to perform a shock-absorbing function by means of the shock-absorbing hydraulic cylinder 30 and the shock-absorbing spring 50.

When the automobile is accelerated, braked or steered, the sensors (L) generate signals so as to close the sixth conduit (O) and open the seventh conduit (P), thereby moving the first anti-sway piston 403 to the right. Because the anti-sway spring 9 has been compressed to an appropriate amount depending upon the automobile's speed and can resist the push of the first anti-sway piston 403, the first anti-sway piston 403 can only move a small distance to the right. Accordingly, when the automobile is accelerated, braked or steered, the balance of the automobile can be maintained.

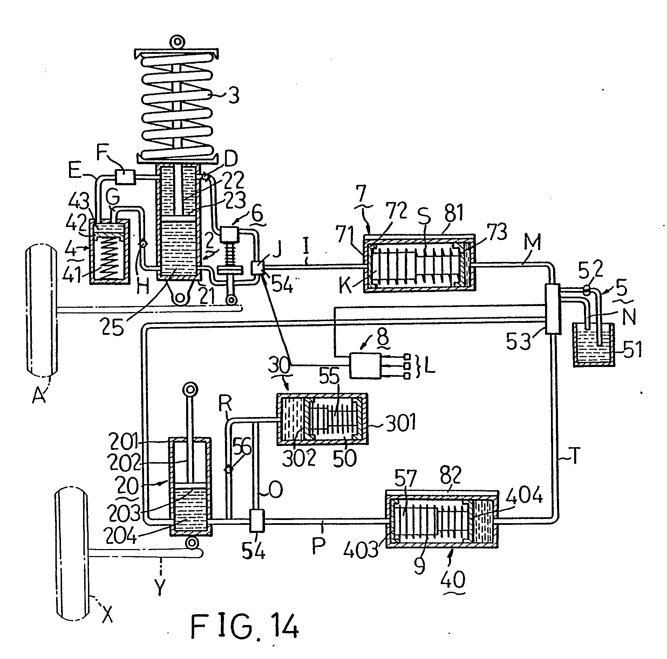

Referring to Fig. 14, although either the third embodiment or the fifth embodiment of this invention can be applied to any of the four wheels of an automobile, in practice, the third embodiment is preferably utilized on a front-wheel suspension system, while the fifth embodiment is preferably utilized on a rear-wheel suspension system.


## Claims

1. An automobile suspension system (I), comprising:
a vertical main suspension hydraulic cylinder (2) having a cylinder body (21), a piston rod (22) and a piston (23), said cylinder body (21) being adapted to connect pivotally to a rocker arm (B) of an automobile wheel (A), said piston (23) dividing the interior of said cylinder body (21) into an upper oil storage space (24) and a lower oil storage space (25), said piston rod (22) being connected to said piston (23) at a bottom end thereof and having a top end extending from said cylinder body (21) to connect pivotally to the bottom of an automobile body;
a suspension spring (3) disposed on a top portion of said cylinder body (21) of said main suspension hydraulic cylinder (2) and sleeved on said piston rod (22) so as to absorb shock;
a restoration chamber unit (4) including a housing defining a sealed restoration chamber therein, a restoration piston (42) disposed in said restoration chamber, and a second spring (41) pushing said restoration piston (42) upward, said restoration chamber having a third oil storage space (43) above said restoration piston (42);

a hydraulic piping system (5) including a first conduit (C) intercommunicating said upper and lower oil storage spaces (24, 25) in said main suspension hydraulic cylinder (2) and equipped with a one-way valve (D) limiting hydraulic oil flowing from said lower oil storage space (25) to said upper oil storage space (24), a second conduit (E) intercommunicating said upper oil storage space (24) in said main suspension hydraulic cylinder (2) and said third oil storage space (43) of said restoration chamber and equipped with a first damper (F) on said second conduit (E), and a third conduit (G) intercommunicating said third oil storage space (43) and said lower oil storage space (25) and equipped with a one-way valve (H) limiting said hydraulic oil flowing from said third oil storage space (43) to said lower oil storage space (25); and
a self-adjusting type damper (6) installed on said first conduit (C) so as to automatically regulate the flow of said hydraulic oil in said first conduit (C), the downward movement of said rocker arm (B) reducing the flow of said hydraulic oil in said first conduit (C).

2. An automobile suspension system as claimed in Claim 1, wherein said first conduit (C) has two separate sections which are interconnected by said self-adjusting type damper (6), said self-adjusting type damper (6) including:
a hollow cylindrical body (61) adapted to be fixed on said automobile body and having two first oil passages (611) respectively communicated with said two sections of said first conduit (C), and a cylindrical, vertical hole (612) formed in a lower end surface of said hollow cylindrical body (61) and communicated with said first oil passages (611) at an intermediate portion of said vertical hole (612);
a cylindrical control rod (62) disposed movably within said vertical hole (612) in said hollow cylindrical body (61) and having a second oil passage (622) communicated with said first oil passages (611) at two ends of said second oil passage (622), and a diameter-increased lower end portion 621 extending from said hollow cylindrical body (61);
a coiled push spring (63) sleeved on said control rod (62) between said hollow cylindrical body (61) and said diameter-increased lower end portion 621 of said control rod (62) so as to bias said control rod (62) to move downward; and
a push rod (64) connected pivotally to said rocker arm (B) at a lower end thereof and abutting against a bottom surface of said diameter-increased lower end portion 621 of said control rod (62).

3. An automobile suspension system (II, III), comprising:
a vertical main suspension hydraulic cylinder (2) having a cylinder body (21), a piston (23) and a piston rod (22), said cylinder body (21) being adapted to connect pivotally to a rocker arm (B) of an automobile wheel (A), said piston (23) dividing interior of said cylinder body (21) into an upper oil storage space (24) and a lower oil storage space (25), said piston rod (22) being connected securely to said piston (23) at a bottom end thereof and having a top end extending from said cylinder body (21) to connect pivotally to the bottom of an automobile body;

a suspension spring (3) disposed on a top portion of said main suspension hydraulic cylinder (2) and sleeved on said piston rod (22) so as to absorb shock;

a restoration chamber unit (4) including a housing defining a restoration chamber therein, a restoration piston (42) disposed in said restoration chamber, and a second spring (41) pushing said restoration piston (42) upward, said restoration chamber having a third oil storage space (43) above said restoration piston (42);

an anti-sway hydraulic cylinder (7) including a cylinder body (71) fixed on said automobile body, and a first piston (72) disposed in said cylinder body (71) of said anti-sway hydraulic cylinder (7) so as to define a first oil chamber in one end of said anti-sway hydraulic cylinder (7);

a hydraulic piping system (5) including a first conduit (C) intercommunicating said upper and lower oil storage spaces (24, 25) and equipped with a one-way valve (D) limiting hydraulic oil flowing from said lower oil storage space (25) to said upper oil storage space (24), a second conduit (E) intercommunicating said upper oil storage space (24) in said main suspension hydraulic cylinder (2) and said third oil storage space (43) in said restoration chamber and equipped with a first damper (F), a third conduit (G) intercommunicating said third oil storage space (43) in said restoration chamber and said lower oil storage space (25) in said main suspension hydraulic cylinder (2) and equipped with a one-way valve (H) limiting said hydraulic oil flowing from said third oil storage space (43) in said restoration chamber to said lower oil storage space (25) in said main suspension hydraulic cylinder (2), and a fourth conduit (I) intercommunicating said lower oil storage space (25) in said main suspension hydraulic cylinder (2) and said first oil chamber in said anti-sway hydraulic cylinder (7) and equipped with a two-way valve (J) which controls the opening and closing of said first and fourth conduits (C, I);

an anti-sway spring (S) disposed in said anti-sway hydraulic cylinder (7) so as to bias said first piston (72) of said anti-sway hydraulic cylinder (7) to compress said hydraulic oil in said first oil chamber of said anti-sway hydraulic cylinder (7), said first piston (72) being attached to one end of said anti-sway spring (S);

a processing system (8) including a plurality of sensors installed on said automobile body, a steering wheel assembly and four wheels of an automobile so as to generate signals therefrom when said automobile is accelerated, steered or braked, a logic circuit receiving said signals from said sensors (L) so as to activate said first two-way valve (J) to close said first conduit (C) and open said fourth conduit (I); and

three dampers (6, F, K) respectively disposed on said first conduit, said second conduit (E) and said anti-sway spring (S).

4. An automobile suspension system as claimed in Claim 3, wherein said anti-sway hydraulic cylinder (7) includes a second piston (73) attached to the other end of said anti-sway spring (S) so as to define a second oil chamber in the other end of said anti-sway hydraulic cylinder (7), said hydraulic piping system (8) including an oil tank (51), a fifth conduit (M) intercommunicating said oil tank (51) and said second oil chamber in said anti-sway hydraulic cylinder (7), an oil feed conduit communicated with said oil tank (51), an oil return conduit communicated with said oil tank (51), a pump (52) installed on said oil feed conduit so as to force hydraulic oil in said oil tank (51) into said second oil chamber in said anti-sway hydraulic cylinder (7), a second two-way valve (53) connecting said fifth conduit (M) to both said oil feed conduit and said oil return conduit, said processing system (8) including a position sensor (81) which activates said second two-way valve (53) to enable said hydraulic oil to flow from said oil tank (51) to said second oil chamber in said anti-sway hydraulic cylinder (7) until said second piston (73) moves to a selected position in said anti-sway hydraulic cylinder (7).

5. An automobile suspension system (IV), comprising:

a vertical suspension hydraulic cylinder (20) having a suspension cylinder body (201), a suspension piston rod (202) and a suspension piston (203), said suspension cylinder body (201) being adapted to connect pivotally to a rocker arm (Y) of an automobile wheel (X), said suspension piston (203) defining an oil storage space (204) thereunder in said suspension cylinder body (201), said suspension piston rod (202) being connected securely to said suspension piston (203) at a bottom end thereof and having a top end extending from said suspension cylinder body (201) to connect pivotally to the bottom of an automobile body;

a shock-absorbing hydraulic cylinder (30) having a shock-absorbing cylinder body (301) having an inner diameter greater than that of said suspension cylinder body (201), a shock-absorbing piston (302), and a shock-absorbing piston rod (303) connected securely to said shock-absorbing piston (302) at one end thereof so as to define a shock-absorbing hydraulic chamber in said shock-absorbing hydraulic cylinder (30) on the other side of said shock-absorbing piston (302), said shock-absorbing piston rod (303) extending from said shock-absorbing cylinder body (301) at the other end thereof; an anti-sway hydraulic cylinder (40) having an anti-sway cylinder body (401) having an inner diameter which is smaller than that of said suspension cylinder body (201), an anti-sway piston (403), and an anti-sway piston rod (402) connected securely to one side of said anti-sway piston (403) so as to define an anti-sway hydraulic chamber in said anti-sway hydraulic cylinder body (401) on the other side of said anti-sway piston (403), said anti-sway piston rod (402) extending from said anti-sway cylinder body (401) at the other end thereof; a shock-absorbing spring (50) biasing said shock-absorbing piston (302) and said anti-sway piston (403) to compress said shock-absorbing hydraulic chamber and said anti-sway hydraulic chamber; a damper (55) disposed in said shock-absorbing spring (50); a hydraulic piping system (5) including an oil tank (51), a sixth conduit (O) intercommunicating said oil storage space (204) and said shock-absorbing hydraulic chamber, a seventh conduit (P) intercommunicating said oil storage space (204) and said anti-sway hydraulic chamber, an eighth conduit (Q) communicated with said oil storage space (204), an oil feed conduit communicated with said oil tank (51), an oil return conduit communicated with said oil tank (51), a second two-way valve (53) connecting said eighth conduit (Q) to both said oil feed conduit and said oil return conduit, a pump (52) disposed on said oil feed conduit so as to force hydraulic oil from said oil tank (51) to said oil storage space, a third two-way valve (54) interconnecting said sixth conduit (O) and said seventh conduit (P), a ninth conduit (R) intercommunicating said oil storage space (204) and said shock-absorbing hydraulic chamber, and a one-way valve (56) disposed on said ninth conduit (R) so as to limit said hydraulic oil flowing from said shock-absorbing hydraulic chamber to said oil storage space (204); and a processing system (8) including a plurality of sensors distributed on an automobile body, a steering wheel assembly and four wheels of an automobile so as to generate signals when said automobile is accelerated, steered or braked, and a logic circuit receiving said signals from said sensors so as to activate said third two-way valve (54) to close said sixth conduit (O) and open said seventh conduit (P).

6. An automobile suspension system as claimed in Claim 5, wherein said shock-absorbing piston rod (303) is in line with said anti-sway piston rod (402).

7. An automobile suspension system (V), comprising:
a vertical suspension hydraulic cylinder (20) having a suspension cylinder body (201), a suspension piston rod (202) and a suspension piston (203), said suspension cylinder body (201) being adapted to connect pivotally to a rocker arm of an automobile wheel, said suspension piston (203) defining an oil storage space (204) thereunder in said suspension cylinder body (201), said suspension piston rod (202) being connected securely to said suspension piston (203) at a bottom end thereof and having a top end extending from said suspension cylinder body (201) to connect pivotally to the bottom of an automobile body;
a shock-absorbing hydraulic cylinder (30) having an inner diameter greater than that of said suspension hydraulic cylinder (20) and including a shock-absorbing piston 302 which defines a shock-absorbing hydraulic chamber in said shock-absorbing hydraulic cylinder (30);
a shock-absorbing spring (50) biasing said shock-absorbing piston (302) to compress said shock-absorbing hydraulic chamber;
an anti-sway hydraulic cylinder (40) including two anti-sway pistons (403, 404) respectively and movably disposed in two end portions thereof to define two anti-sway hydraulic chambers in said end portions of said anti-sway hydraulic cylinder (40);
an anti-sway spring (9) disposed in said anti-sway hydraulic cylinder (40) between said anti-sway pistons (403, 404) so as to bias said anti-sway pistons (403, 404) to move toward two ends of said anti-sway hydraulic cylinder (40);
a hydraulic piping system (5) including an oil tank (51), a sixth conduit (O) intercommunicating said oil storage space (204) and said shock-absorbing hydraulic chamber, a seventh conduit (P) intercommunicating said oil storage space (204) and said anti-sway hydraulic chamber, an eighth conduit (Q) communicated with said oil storage space (204), an oil feed conduit communicated with said oil tank (51), an oil return conduit communicated with said oil tank (51), a second two-way valve (53) connecting said eighth conduit (Q) to both said oil feed conduit and said oil return conduit, a pump (52) disposed on said oil feed conduit so as to force hydraulic oil from said oil tank (51) to said oil storage space (204), a third two-way valve (54) interconnecting said sixth conduit (O) and said seventh conduit (P), a ninth conduit (R) intercommunicating said oil storage space (204) and said shock-absorbing hydraulic chamber, a one-way valve (56) disposed on said ninth conduit (R) so as to limit said hydraulic oil flowing from said shock-absorbing hydraulic chamber to said oil storage space (204), and a tenth conduit (T) connected to said second two-way valve (53) and communicated with said anti-sway hydraulic chamber;

two dampers (55, 57) respectively disposed in said shock-absorbing spring (50) and said anti-sway spring (9); and

a processing system (8) including a plurality of sensors (L) distributed on an automobile body, a steering wheel assembly and four wheels of an automobile so as to generate signals when said automobile is accelerated, steered or braked, a logic circuit receiving said signals from said sensors (L) so as to activate said third two-way valve (54) to close said sixth conduit (O) and open said seventh conduit (P), and a position sensor (82) activating said second two-way valve (53) to enable said hydraulic oil to flow from said oil tank (51) to said second oil chamber in said anti-sway hydraulic cylinder (40) until said anti-sway spring (9) is compressed to a predetermined amount.

FIG. 1

FIG. 2

FIG. 3

FIG. 4

FIG. 5

EP 0 394 079 A1

FIG. 6

EP 0 394 079 A1

FIG. 7

EP 0 394 079 A1

FIG.8

FIG. 9

FIG. 10

FIG. 11

FIG. 12

EP 0 394 079 A1

FIG. 13

FIG. 14

FIG. 15
(PRIOR ART)

FIG. 16
(PRIOR ART)

EP 0 394 079 A1

European Patent
Office

Application number

**EUROPEAN SEARCH REPORT**

## DOCUMENTS CONSIDERED TO BE RELEVANT

EP 90400540.2

| Category | Citation of document with indication, where appropriate, of relevant passages | Relevant to claim | CLASSIFICATION OF THE APPLICATION (Int Cl⁵) |
|---|---|---|---|
| A | FR - A1 - 2 611 606 (JIMECAL) * Fig. 5,6,7 * | | B 60 G 17/08 |
| A | US - A - 4 821 849 (MILLER) * Fig. 1-4 * | | |
| A | US - A - 3 807 678 (KARNOPP) * Fig. 2 * | | |
| A | DE - A1 - 3 610 937 (BOSCH) * Fig. 2-5 * | | |

TECHNICAL FIELDS
SEARCHED (Int Cl⁵)

B 60 G

The present search report has been drawn up for all claims

| Place of search | Date of completion of the search | Examiner |
|---|---|---|
| VIENNA | 21-05-1990 | PANGRATZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82